**Europäisches Patentamt**

**European Patent Office**

**Office européen des brevets**

(19)

(11) Veröffentlichungsnummer: **0 243 741**
**B1**

(12) **EUROPÄISCHE PATENTSCHRIFT**

(45) Veröffentlichungstag der Patentschrift:
18.10.89

(21) Anmeldenummer: **87105155.3**

(22) Anmeldetag: **08.04.87**

(51) Int. Cl.⁴: **B64D 11/00, A62B 17/04**

(54) **Rettungsgerät im Flugzeug.**

(30) Priorität: **24.04.86 DE 3613813**

(43) Veröffentlichungstag der Anmeldung:
**04.11.87 Patentblatt 87/45**

(45) Bekanntmachung des Hinweises auf die Patenterteilung:
**18.10.89 Patentblatt 89/42**

(84) Benannte Vertragsstaaten:
**DE ES FR GB IT NL**

(56) Entgegenhaltungen:
**FR-A- 830 451**
**US-A- 4 116 237**
**US-A- 4 559 939**

(73) Patentinhaber: **Drägerwerk Aktiengesellschaft,
Moislinger Allee 53-55, D-2400 Lübeck 1(DE)**

(72) Erfinder: **Hahn, Rainer, Ing. grad., Friedhofsallee 22,
D-2400 Lübeck(DE)**

ACTORUM AG

**Beschreibung**

Die Erfindung betrifft ein Rettungsgerät im Flugzeug, gemäß den Merkmalen des Oberbegriffs im Anspruch 1.

Ein derartiges Rettungsgerät ist in der US-A 4 116 237 beschrieben. Es besitzt eine Schutzhaube, welche von einer mit ihr verbundenen Sauerstoffquelle gespeist wird, die im Bereich der Brust und des Rückens des Geräteträgers rahmenförmig an entsprechenden Schürzen der Haube eingearbeitet sind. Mit der Haube fest verbunden sind einige Auftriebskörper, die im Falle einer Notwasserung den im Wasser treibenden Passagier vor dem Ertrinken bewahrt.

Nachteilig bei dieser Anordnung erweist es sich, daß beim Anlegen des bekannten Rettungsgerätes allein zum Schutz gegen Rauchentwicklung und vor schädlichen Gasen immer die Schürzen mit den Auftriebskörpern angelegt werden müssen, auch wenn dies nicht notwendig ist. Soll das bekannte Rettungsgerät andererseits lediglich als Schwimmweste eingesetzt werden, ist zwangsläufig die vollständige Haube mit zugehöriger Atemgasversorgung anzulegen. Die Haube behindert den Träger aber unnötigerweise in seinem Sichtfeld und in seiner Bewegungsfreiheit. Während des Aufenthalts im Wasser ist dann zusätzlich die Atmung behindert, bzw. der begrenzte Atemgasvorrat schränkt die Gebrauchsdauer der Schwimmweste ein.

Der vorliegenden Erfindung liegt somit die Aufgabe zugrunde, ein Rettungsgerät der genannten Art so zu verbessern, daß sein Gebrauch als Atemschutz und Rauchschutz einerseits und als Schwimmweste andererseits nicht durch die jeweilige nicht notwendige Schutz- und Rettungsfunktion behindert wird, und dennoch eine kombinierte Schutzwirkung gegen Brand- und Rauchgefahr und als Schwimmweste erhalten bleibt.

Die Lösung der Aufgabe erfolgt durch die kennzeichnenden Merkmale des Anspruchs 1.

Der wesentliche Vorteil der Erfindung ist darin zu sehen, daß im Notfalle bei einem Druckabfall in der Flugzeugkabine der Benutzer die Haube über den Kopf ziehen und mit dem gleichen Arbeitsgang die Schwimmweste anlegen kann. Durch das Heranziehen der Haube zum Kopf des Benutzers wird in bekannter Weise die Lieferung des zusätzlichen Atemsauerstoffs ausgelöst. Es entfällt somit das getrennte Anlegen von Atemmaske, Rauchschutzhaube und Schwimmweste, wodurch ein schnelles und sicheres Anlegen des Rettungsgerätes mit allen seinen Schutzfunktionen ermöglicht wird.

Das Rettungsgerät mit Rauchschutzhaube und Schwimmweste kann je nach Bedarf wie bisher im Deckenbereich der Flugzeugkabine über den Passagiersitzen oder auch unterhalb der Sitze sowie in den Lehnen der Sitze untergebracht sein.

Hat der Flugzeugpassagier bei angelegtem Rettungsgerät das zum Beispiel notgewasserte Flugzeug zu verlassen, kann er die Rauchschutzhaube über den Bandverschluß von der Schwimmweste lösen, damit er an der Wasseroberfläche frei atmen kann.

Andererseits kann der Passagier die Rauchschutzhaube alleine aufsetzen und die nicht benötigte Schwimmweste abtrennen, ohne die noch notwendige Atemgasversorgung zu gefährden, wie es bei dem bekannten Rettungsgerät der Fall wäre, würde man die Schürzen mit den Auftriebskörpern als Ganzes von der Rauchschutzhaube trennbar gestalten.

Eine weitere vorteilhafte Möglichkeit für den Flugpassagier, sich zu seiner Rettung frei bewegen zu können, ist dadurch gegeben, daß die Maske mit einem Filter versehen ist, an dem ein lösbares Anschlußstück zum Verbindungsschlauch aufgesetzt ist. Falls notwendig, kann der Passagier das Anschlußstück vom Filter lösen, so daß er unter dem Schutz der Rauchschutzhaube und der Schwimmweste gefilterte Umgebungsluft einatmen kann. Die Ausatemluft kann über ein Ausatemventil entweichen.

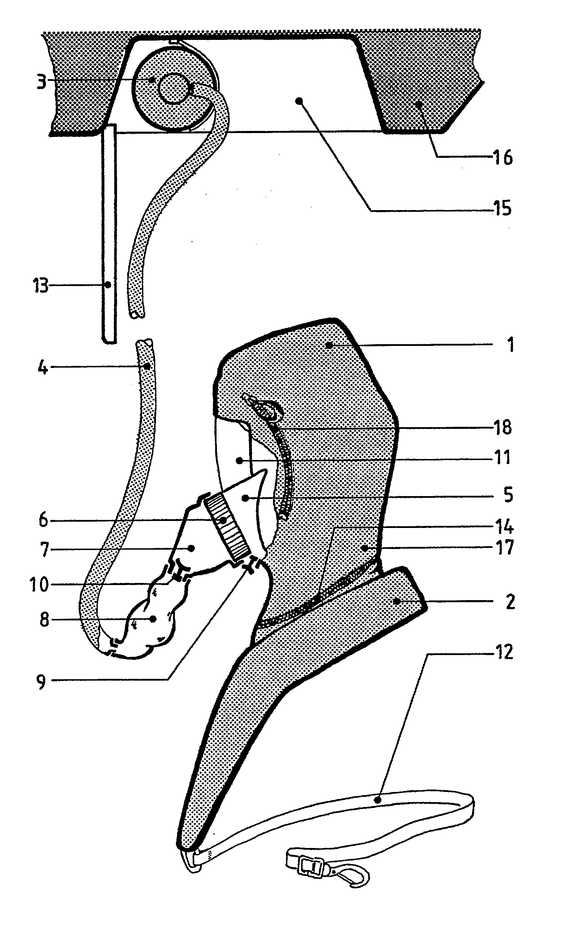

Ein Ausführungsbeispiel der Erfindung wird in der Zeichnung schematisch dargestellt und im folgenden näher erläutert.

In der einzigen Figur ist die Rauchschutzhaube (1) mit der Schwimmweste (2) in entfaltetem Zustand dargestellt, so wie sie vom Flugzeugpassagier über den Kopf gestülpt werden kann. Eine Sauerstoffquelle zum Beispiel in Form eines Festsauerstoffgenerators (3) ist über einen Verbindungsschlauch (4) mit der Maske (5) verbunden. Die Maske (5) enthält ein Filter (6), auf welches ein Anschlußstück (7) aufgesetzt ist, das wiederum über einen Atembeutel (8) an den Verbindungsschlauch (4) angeschlossen ist. Die Maske (5) enthält ein Ausatemventil (9), und das Anschlußstück (7) besitzt im Übergang zum Atembeutel (8) ein Rückschlagventil (10). Die Rauchschutzhaube (1) ist im Maskenbereich mit einem Sichtfenster (11) versehen. Über Bandverschlüsse (14), die als Reißverschluß oder Klettverschluß ausgebildet sein können, ist die Rauchschutzhaube (1) im Kragenbereich (17) mit der Schwimmweste (2) lösbar verbunden. Die Schwimmweste (2) wird in üblicher Weise über einen Gurt (12) am Körper des nichtdargestellten Flugpassagiers gehalten. Über weitere Bandverschlüsse (18) kann eine Öffnung zur Umwelt hergestellt bzw. verschlossen werden.

Während der Bereitschaft sind die dargestellten Teile zusammengefaltet in einem mit einem Deckel (13) verschließbaren Gehäuse (15), welches sich im Deckenbereich (16) des Flugzeuges befindet.

**Patentansprüche**

1. Rettungsgerät im Flugzeug, bestehend aus einer Sauerstoffquelle (3), an die über einen Verbindungsschlauch (4) eine Maske (5) angeschlossen ist, welche im Aufenthaltsbereich eines Flugpassagiers in einem öffenbaren Behälter (15) untergebracht sind, wobei die Maske (5) in einer Rauchschutzhaube (1) eingearbeitet ist, an deren Kragenbereich (17) sich eine Schwimmweste (2) anschließt, dadurch gekennzeichnet, daß die Rauchschutzhaube (1) über einen Bandverschluß (14) lösbar mit der Schwimmweste (2) verbunden ist.

2. Rettungsgerät nach Anspruch 1, dadurch gekennzeichnet, daß die Sauerstoffquelle (3) über eine Tragevorrichtung mitführbar ausgestaltet ist.

3. Rettungsgerät nach Anspruch 1 oder 2, dadurch gekennzeichnet, daß die Maske (5) mit einem Ausatemventil (9) und einem Filter (6) versehen ist, an dem ein lösbares Anschlußstück (7) zum Verbindungsschlauch (4) aufgesetzt ist.

## Claims

1. Life-saving equipment in an airplane, consisting of an oxygen source (3), on which, by way of a connecting tube (4), there is attached a mask (5), which are accommodated in the resting area for an air passenger, in a receptacle (15), able to be opened, whereby the mask (5) is incorporated into a smokeprotective hood (1), connected to the collar region (17) of which there is a life-saving jacket (2), characterized in that the smoke-protective hood (1) is releasably connected to the life-saving jacket (2), by way of a band seal (14).

2. Life-saving equipment according to claim 1, characterized in that the oxygen source (3) is provided with a carrying device, able to be carried along.

3. Life-saving equipment according to claim 1 or 2, characterized in that the mask (5) is provided with an expiratory valve (9) and a filter (6) on which a releasable connection piece (7) is attached to the connecting tube (4).

## Revendications

1. Equipement de sauvetage pour aéronef, composé d'une source d'oxygène (3) à laquelle un masque (5) est raccordé par l'intermédiaire d'un tuyau de liaison (4), ces éléments étant logés dans un conteneur ovrant (15) situé dans la zone de séjour d'un passager de l'aéronef, le masque (5) étant formé dans une cagoule de protection contre les fumées (1) à laquelle se raccorde, dans la région du col (17), un gilet de sauvetage (2), caractérisé en ce que la cagoule de protection contre les fumées (1) est reliée de façon séparable au gilet de sauvetage (2) par l'intermédiaire d'une fermeture à glissière (14).

2. Equipement de sauvetage selon la revendication 1, caractérisé en ce que la source d'oxygène (3) est conformée de manière à être transportable au moyen d'un dispositif de portage.

3. Equipement de sauvetage selon la revendication 1 ou 2, caractérisé en ce que le masque (5) est pourvu d'une soupape d'expiration (9) et d'un filtre (6), sur lequel est montée une pièce de raccordement movible (7) pour le tuyau de liaison (4).